Europäisches Patentamt

European Patent Office

Office européen des brevets

(19)

(11) Publication number: **0 122 715**
**B1**

(12) **EUROPEAN PATENT SPECIFICATION**

(45) Date of publication of the patent specification: 11.03.87

(51) Int. Cl.⁴: **A 01 G 17/08, F 16 B 2/08**

(21) Application number: **84301701.3**

(22) Date of filing: **13.03.84**

(54) Tie apparatus.

(30) Priority: **21.03.83 US 477112**

(43) Date of publication of application:
**24.10.84 Bulletin 84/43**

(45) Publication of the grant of the patent:
**11.03.87 Bulletin 87/11**

(84) Designated Contracting States:
**AT BE DE FR GB IT NL**

(56) References cited:
**DE - A - 1 582 702**
**DE - A - 1 906 474**
**FR - A - 2 328 125**

(73) Proprietor: **ILLINOIS TOOL WORKS INC., 8501 West Higgins Road, Chicago Illinois 60631 (US)**

(72) Inventor: **Frano, Francis Gene, 1925 Brookside Lane, Hoffman Estates Illinois 60194 (US)**

(74) Representative: **Gordon, Michael Vincent et al, GILL JENNINGS & EVERY 53-64 Chancery Lane, London WC2A 1HN (GB)**

## Description

The present invention is directed generally to tie apparatus and more particularly to tie apparatus whose component parts are integrally formed with one another.

While the present invention may find utility in a variety of applications, the disclosure will be facilitated by addressing specifically the problem of suspending grape vines from support wires. Historically, strips of fabric, string or the like have been utilized to attach or suspend grape vines from overhead lines or support wires. It will be appreciated, however, that this process is time consuming and relatively labour intensive. Moreover, care must be taken to ensure that the string or fabric strips are not tied too tightly, to allow the vines sufficient room to grow within the tie. To release the grape vines at the end of the season, when they are typically cut back, the fabric or string is cut and discarded, thus requiring new ties to be provided and installed for the following growing season.

A device for tying grape vines is known from DE-A-1 582 702, the device being integrally formed of a plastics material, There is vine holding means comprising a band provided transversely of its longitudinal direction with ribs, beads or the like and a closure piece having a funnel-shaped recess. In use, the ribs on the band are pulled through the funnel-shaped recess to lock the band into a closed loop for suspending the vines. There may be releasable line engaging means comprising a U-shaped clip for hooking the device onto a support wire, and the free ends of the legs of the U-shaped clip may be provided with barbs for resisting inadvertent release of the U-shaped clip from the support wire. To remove the vines from the device, during vine pruning, it is necessary to cut through the band with vine shears. The device is thus not re-usable.

General objects of the present invention are to provide tie apparatus which: is re-usable and is adapted to be left installed on an overhead line or support wire; is adapted to be attached to the support wire by a simple manipulation and is further adapted loosely to surround one or more vines in response to a second relatively simple manipulation; and is relatively simple and inexpensive to construct as a one-piece integrally formed member, such as by an inexpensive plastics moulding process or the like.

A more specific object of the present invention is to provide tie apparatus from which the one or more suspended vines are releasable in response to a predetermined amount of force applied thereto.

Tie apparatus in accordance with the present invention comprises line engaging means which is releasable from a line or the like and is integrally formed with vine holding means for suspending one or more vines or the like; said vine holding means including elongate flexible arm means extending from said line engaging means and elastically deformable to define a loop; locking means formed at a remote end of said flexible arm means; complementary locking means at said line engaging means for engaging said locking means to close said loop and permit suspension of said one or more vines or the like from said line or the like; characterised in that said complementary locking means is responsive to application of a predetermined amount of force to said flexible arm means, in a direction permitting said locking means to be pulled through said complementary locking means, thereby releasing said locking means and opening said closed loop.

Said direction may be selected from a range of directions, between the vertically down and somewhat below the horizontal, which all permit said locking means to be pulled through said complementary locking means.

In a particularly preferred embodiment of the present invention, said locking means is substantially spherical in configuration and defines a diameter of predetermined dimension; said complementary locking means is a generally U-shaped channel having sidewall portions and defining a cross-sectional dimension less than said predetermined dimension; said sidewall portions have sidewall extensions; and locking recess means and cam lead-in surface means are located on said sidewall extensions; said U-shaped channel and said sidewall extensions thereof being elastically deformable for permitting said locking means to be pulled therethrough in response to said force applied to said flexible arm means.

Said particularly preferred tie apparatus, in accordance with the present invention, will now be described, by way of example only, with reference to the accompanying drawings, in which: –

Figure 1 is a front elevation of tie apparatus in accordance with the present invention, illustrating engagement thereof with an overhead line or support wire;

Figure 2 is a perspective view of the tie apparatus shown suspending several vines from the overhead line;

Figure 3 is a side elevation of the tie apparatus illustrating elastically deformable movement thereof for completely surrounding the vines;

Figure 4 is a front elevation similar to Figure 1 illustrating the tie apparatus in a closed or locked configuration for normally surrounding and suspending the vines from the overhead wire and further illustrating one method of releasing the vines;

Figure 5 is an enlarged view of a portion of Figure 4 illustrating elastic deformation of portions of the tie apparatus for releasing the vines therefrom;

Figure 6 is a side elevation taken generally in the plane of the line 6–6 of Figure 1;

Figure 7 is a top plan view taken generally in the plane of the line 7–7 in Figure 1; and

Figure 8 is an enlarged partial sectional view taken generally along the line 8–8 of Figure 4.

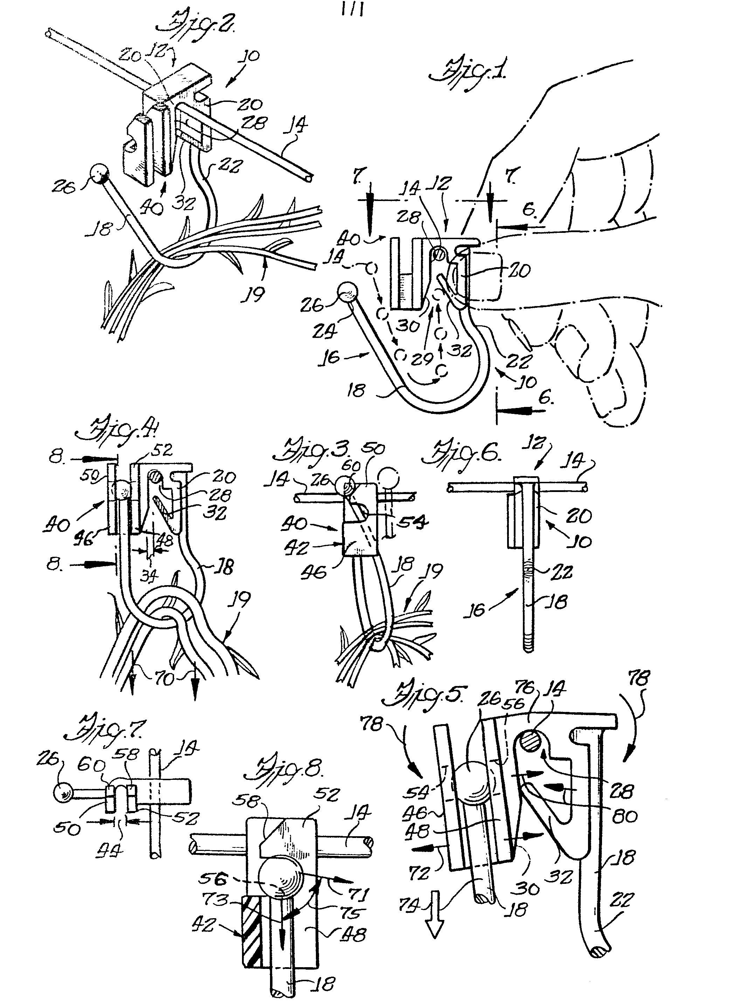

The attention of the reader is directed to Figure 1 of the accompanying drawings, wherein tie apparatus in accordance with the present invention is designated generally by the reference numeral 10. This tie or clip 10 includes a line engaging portion designated generally by the reference numeral 12 for surroundingly engaging an overhead support wire or line 14 and an integrally formed vine holding portion designated generally by the reference numeral 16 for surroundingly engaging one or more vines to be suspended from the overhead support wire or line 14.

Referring initially to the vine supporting or holding portion 16, it will be seen that it includes an elongate flexible arm member or portion 18 which depends integrally from a side or peripheral wall portion 20 of the wire engaging portion 12. Preferably, this elongate flexible arm 18 is generally fishhook-shaped and curves outwardly somewhat as indicated at reference numeral 22 adjacent its junction with the peripheral or side wall 20. Additionally, an opposite free end or terminal end 24 of the arm 18 is provided with an integrally formed enlarged head portion 26 which in the illustrated embodiment is generally spherical in form. As will be seen presently, the spherical surface of the head 26 comprises a cam surface for locking engagement with locking structure also formed integrally with the wire or line engaging structure 12. Preferably, the extent of the arm 18 is such as to normally locate the head 26 somewhat vertically below and laterally spaced apart from the wire engaging structure 12 as best viewed in Fig. 1.

Referring next to the wire engaging structure 12, it will be seen to include the outer or peripheral wall portion 20 which defines a generally U-shaped passage 28 having an entrance 29 for receiving the wire 14. The entrance 29 may be provided with a flared out lead-in surface 30 to facilitate placement and guidance of the wire 14 with respect to the passage 28. An additional flexible closure member 32 is provided for normally closing off a major fractional part of the entrance 29. As best viewed in Fig. 4, this flexible closure member 32 is angled inwardly of the passage and leaves a small gap or opening 34 in the otherwise closed entrance 29.

Preferably, flexible closure 32 is elastically movable inwardly of passage 28 for permitting ingress or entry of the wire 14 into the passage 28 as illustrated generally in Fig. 1. In this regard, the clip or tie may be manually gripped as generally illustrated in phantom line in Fig. 1 and moved with a relatively simple motion to achieve the motion relative to wire 14 generally indicated by the arrows associated with the wire 14 in Fig. 1. Preferably, however, the clip 10 is moved with the wire 14 remaining stationary. It will be recognized from the foregoing that the elastically deformable closure member 32 normally opposes removal of the wire or line 14 once positioned in the passage 28 as just described. In this regard, preferably the dimension accross the gap 34 is somewhat smaller than the diameter of the wire 14. However, the passage 28 is preferably considerably larger than the cross-sectional dimension of the wire 14.

Thus, the tie or clip 10 is held rotatably suspended from the wire 14.

Referring now to Fig. 2, it will be seen that one or more vines 19 or similar objects may be readily inserted into a partial loop defined by the generally fishhook-shaped flexible arm 18 between the head 26 thereof and a locking portion designated generally by the reference numeral 40 to be presently described.

Reference is next invited to Fig. 3, which illustrates the interfitting and releasable locking of the arm 18 and in particular the head portion 26 with respect to the locking portion 40. In this regard, it will be appreciated that the flexible arm 18 is elastically deformable to accomplish the movement into a «locked» or «closed loop» position illustrated in Fig. 4. In this regard, the locking portion 40 is integrally formed adjacent to a side portion of the peripheral wall 20 and is generally co-extensive in height therewith. This locking portion 40 includes a channel portion 42 which comprises a generally U-shaped channel defining a cross sectional dimension 44 (see Fig. 7). Generally co-extensive, parallel and spaced apart side walls 46 and 48 of the channel 42 define this dimension 44 which is somewhat less than the diameter of the spherical head 26.

Extensions 50 and 52 of the side walls 46 and 48 define generally U-shaped locking recesses 54 and 56 which are dimensioned for receiving opposite outer edge portions of the spherical head member or portion 26. Preferably, interior surfaces of the recesses 54, 56 are semicircular and define diameters somewhat smaller than the diameter of spherical head 26. Accordingly, the locking recesses 54 and 56 are generally congruent and coaxially located (with each other) on the spaced apart extensions 50 and 52.

Cooperatively, a pair of cam lead-in surfaces 58, 60 are formed on upper edges of the extensions 50, 52 for slideably guiding the spherical head member or portion 26 around the extensions and into engagement with the locking recesses 54, 56 as illustrated generally in Figs. 3 and 4. In this regard, the flexible arm 18 is preferably sufficiently elastically deformable to permit this motion. However, this elastically deformable arm preferably resiliently tends to return toward its undeformed position illustrated in Figs. 1 and 2, whereby the head portion 26 is urged generally in a direction so as to encourage or facilitate locking engagement with the respective locking recesses 54, 56.

Advantageously, the elongate arm 18 thereby defines a sufficiently large enclosed loop, as illustrated in Fig. 4, to permit substantial growth of the vines 19 once loosely surrounded thereby and suspended from the overhead support wire or line 14. At the end of a growing season, the vines may readily be removed from the clip or tie apparatus 10 of the invention by the simple expedient of grasping the vines 19 and pulling sharply generally in a downward direction as indicated by arrows 70 (see Fig. 4). However, referring briefly to Fig. 8, this releasing force may be applied, relative to the head 26, generally in any of a plurality of directions between arrows 71 (somewhat below the horizontal) and 73 (vertically down) as indicated by arrows 75.

As best viewed in Fig. 5, this force or motion will cause the cam surface defined generally by spherical head 26 to engage or cam against additional cam surfaces generally defined by side wall extensions 50 and 52 about the recesses 54 and 56. When sufficient force is imparted to the head 26 by way of the arm or loop 18 and vines 19 as described, the side walls 46 and 48 and their extensions 50 and 52 will elastically deform as indicated generally by arrows 72. This permits slideable withdrawal of the head 26 from the locking recesses 54 and 56, generally through the expanded or deformed channel 42 and/or extensions 50, 52, for example, as indicated generally by the arrow 74.

Hence, the clip or tie apparatus 10 may advantageously be left suspended or hanging from the overhead or line or support wire 14 for later use as desired.

Advantageously, in this regard, and as best illustrated in Fig. 5, the structure of the invention prevents disengagement of the wire or line engaging portion 12 during the foregoing removal operation. In this regard, it will be seen that the motion or force indicated by line 70 (Fig. 4) or 71, 73 (Fig. 8) will also cause a hinge-like deformation of a central or apical (and preferably relatively thinner) portion 76 of the peripheral wall 20. This in turn causes fulcruming of respective sides thereof as indicated generally at arrows 78. This motion in turn causes relative inward collapse or movement of the facing inner side wall surfaces of the passage 28 as indicated generally at arrows 80. It will be recognized that this inward collapse or motion urges the otherwise free end of the flexible closure member 32 into relatively firm engagement with the facing interior surface of the passage 28 to substantially prevent disengagement of the clip or tie apparatus 10 during the vine removal procedure just described. It is believed in this regard that the elastic return of the peripheral wall portions 20 to the undeformed state illustrated in Figs. 1 and 2 is delayed sufficiently to prevent disengagement from the wire or line 14 as it «snaps» back when the force indicated by arrow 70 is released.

## Claims

1. Tie apparatus (10), comprising line engaging means (12) which is releasable from a line (14) or the like and is integrally formed with vine holding means (16) for suspending one or more vines (19) or the like; said vine holding means (16) including elongate flexible arm means (18) extending from said line engaging means (12) and elastically deformable to define a loop; locking means (26) formed at a remote end (24) of said flexible arm means (18); complementary locking means (40) at said line engaging means (12) for engaging said locking means (26) to close said loop and permit suspension of said one or more vines (19) or the like from said line (14) or the like; characterised in that said complementary locking means (40) is responsive to application of a predetermined amount of force to said flexible arm means (18), in a direction permitting said locking means (26) to be pulled through said complementary locking means (40), thereby releasing said locking means (26) and opening said closed loop.

2. Tie apparatus according to claim 1 wherein said locking means is in the form of enlarged head means (26) defining first cam surface means and said complementary locking means (40) is associated with second cam surface means (50, 52) for normally opposing release of said head means (26) through said complementary locking means (40).

3. Tie apparatus according to claim 1 or claim 2 wherein said line engaging means (12) includes peripheral wall means (20) defining a line receiving passage (28) having an entrance (29) and flexible closure means (32) elastically deformable in a given direction for permitting entry and removal of said line (14) with respect to said entrance (29) and resiliently returnable for opposing removal of said line (14) from said entrance (29).

4. Tie apparatus according to claim 3 wherein said peripheral wall means (20) defining said line receiving passage (28) further includes an elastically deformable portion (76), also responsive to said force applied to said flexible arm means (18), for urging said flexible closure means (32) in a direction for fully closing off said entrance (29) to said passage.

5. Tie apparatus according to claim 4 wherein said peripheral wall means (20) defining said line receiving passage (28) is generally U-shaped in configuration; an open face of said U-shaped peripheral wall means forms said entrance (29) to said passage; said flexible closure means includes a flexible member (32) angled inwardly of said passage and normally extending across a major fractional part of said entrance; and at least a portion (76) of said peripheral wall means is hingedly movable in response to said force applied to said flexible arm means (18) extending therefrom, so as to urge said flexible closure member (32) and an opposing portion of said peripheral wall means (20) together for completely closing off said entrance (29).

6. Tie apparatus according to any preceding claim wherein said complementary locking means (40) includes locking recess means (54, 56) defining internal surface means for complementary engagement with said locking means (26) and cam lead-in surface means (58, 60) for slidably guiding said locking means (26) into engagement with said locking recess means (54, 56).

7. Tie apparatus according to claim 6 wherein said locking means (26) is substantially spherical in configuration and defines a diameter of predetermined dimension; said complementary locking means (40) includes a generally U-shaped channel (42) having sidewall portions (46, 48) and defining a cross-sectional dimension (44) less than said predetermined dimension; said sidewall portions have sidewall extensions (50, 52); and said locking recess means (54, 56) and said cam lead-in surface means (58, 60) are located on said sidewall extensions (50, 52); said U-shaped channel and said sidewall extensions thereof being elastically deformable for permitting said locking means (26) to be pulled therethrough in response to said force applied to said flexible arm means (18).

8. Tie apparatus according to claim 7 wherein said locking recess means (54, 56) are generally semicircular and define diameters less than said predetermined diameter of said substantially spherical locking means (26) and are aligned directly opposite one another along said sidewall extensions (50, 52).

9. Tie apparatus according to any preceding claim wherein said flexible arm means (18) is elastically deformable to permit engagement of said locking means (26) with said complementary locking means (40) and is normally biased for thereafter maintaining engagement of said locking means (26) with said complementary locking means (40).

10. Tie apparatus according to any preceding claim wherein said direction is selected from a range of directions (75), between the vertically down and somewhat below the horizontal, which all permit said locking means (26) to be pulled through said complementary locking means (40).

**Patentansprüche**

1. Bindevorrichtung (10) mit einer mit einer Leitung zusammenwirkenden Einrichtung (12), die von einer Leitung (14) oder dergleichen lösbar und mit einer Weinhalteeinrichtung (16) zum Aufhängen einer oder mehrerer Weinreben (19) oder dergleichen einstückig ausgebildet ist, wobei diese Weinhalteeinrichtung (16) einen langgestreckten flexiblen Arm (18) aufweist, der sich von der mit der Leitung zusammenwirkenden Einrichtung (12) forterstreckt und zur Bildung einer Schleife elastisch verformbar ist, an einem entfernten Ende (24) des flexiblen Arms (18) ausgebildeten Verriegelungseinrichtungen (26), komplementär ausgebildeten Verriegelungseinrichtungen (40) an der mit der Leitung zusammenarbeitenden Einrichtung (12) zur Zusammenwirkung mit den Verriegelungseinrichtungen (26), um die Schleife zu schliessen und ein Aufhängen der genannten einen oder mehrerer Weinreben (19) oder dergleichen an der Leitung (14) oder dergleichen zu gestatten, dadurch gekennzeichnet, dass die komplementäre Verriegelungseinrichtung (40) auf das Aufbringen einer Kraft von vorgegebener Grösse auf den flexiblen Arm (18) in einer Richtung anspricht, die ein Hindurchziehen der Verriegelungseinrichtung (26) durch die komplementäre Verriegelungseinrichtung (40) gestattet und dadurch die Verriegelungseinrichtung (26) freigibt und die geschlossene Schleife öffnet.

2. Vorrichtung nach Anspruch 1, dadurch gekennzeichnet, dass die Verriegelungseinrichtung in Form eines erweiterten Kopfes (26) vorliegt, der eine erste Nockenbahn begrenzt, und die komplementäre Verriegelungseinrichtung (40) einer zweiten Nockenbahn (50, 52) zugeordnet ist, um normalerweise einer Auslösung des Kopfes (26) durch die komplementäre Verriegelungseinrichtung (40) entgegenzuwirken.

3. Vorrichtung nach Anspruch 1 oder 2, dadurch gekennzeichnet, dass die Einrichtung (12) zur Zusammenwirkung mit der Leitung eine Umfangswand (20) enthält, die einen Kanal (28) zur Aufnahme einer Leitung begrenzt, mit einem Eingang (29) und einer flexiblen Schliessvorrichtung (32), die in einer gegebenen Richtung elastisch verformbar ist, um den Eintritt und die Entfernung der Leitung (14) mit Bezug auf den Eingang (29) zu gestatten, und elastisch zurückführbar ist, um einer Entfernung der Leitung (14) aus dem Eingang (29) entgegenzuwirken.

4. Vorrichtung nach Anspruch 3, dadurch gekennzeichnet, dass die Umfangswand (20), die den die Leitung aufnehmenden Kanal (28) begrenzt, ferner einen elastisch verformbaren Abschnitt (76) enthält, der ebenso auf die auf den flexiblen Arm (18) aufgebrachte Kraft anspricht, um die flexible Verschlusseinrichtung (32) in einer Richtung zum vollständigen Abschliessen des Eingangs (29) zu dem Kanal zu drücken.

5. Vorrichtung nach Anspruch 4, dadurch gekennzeichnet, dass die Umfangswand (20), welche den die Leitung aufnehmenden Kanal (28) begrenzt, von allgemein U-förmiger Gestalt ist, eine offene Seite der U-förmigen Umfangswand den Eingang (29) zu dem Kanal bildet, die flexible Verschlusseinrichtung einen flexiblen Körper (32) enthält, der von dem Kanal nach innen abgewinkelt ist und sich normalerweise quer über einen grösseren Bruchteil des Eingangs hinwegerstreckt, und wenigstens ein Abschnitt (76) der Umfangswand in Abhängigkeit von der auf den sich von ihr forterstreckenden flexiblen Arm (18) aufgebrachten Kraft scharnierartig beweglich ist, um den flexiblen Verschlusskörper (32) und einen entgegenwirkenden Abschnitt der Umfangswand (20) zum vollständigen Abschliessen des Eingangs (29) zusammenzudrücken.

6. Bindevorrichtung nach jedem vorhergehenden Anspruch, wobei die komplementäre Verriegelungseinrichtung (40) eine Verriegelungsausnehmung (54, 56) enthält, die eine Innenfläche zur komplementären Zusammenwirkung mit der Verriegelungseinrichtung (26) begrenzt, sowie eine Nockeneinführungsbahn (58, 60) zum gleitenden Hineinführen der Verriegelungseinrichtung (26) in einen Eingriff mit der Verriegelungsausnehmung (54, 56).

7. Bindevorrichtung nach Anspruch 6, in welcher die Verriegelungseinrichtung (26) im wesentlichen sphärisch von Gestalt ist und einen Durchmesser von vorgegebener Abmessung begrenzt, wobei die komplementäre Verriegelungseinrichtung (40) einen allgemein U-förmigen Kanal (46) enthält, der Seitenwandabschnitte (46, 48) aufweist und eine Querschnittsdimension (44) begrenzt, die kleiner als die genannte vorgegebene Dimension ist, und wobei die Verriegelungsausnehmung (54, 56) und die Nockeneinführungsbahnen (58, 60) auf den genannten Seitenwanderstreckungen (50, 52) angeordnet sind, während der genannte U-förmige Kanal und die genannten Seitenwanderstreckungen desselben elastisch verformbar sind, um ein Hindurchziehen der Verriegelungseinrichtung (26) dort hindurch in Abhängigkeit von der auf den flexiblen Arm (18) aufgebrachten Kraft zu gestatten.

8. Vorrichtung nach Anspruch 7, in welcher die Verriegelungseinrichtungen (54, 56) allgemein halbkreisförmig sind und Durchmesser begrenzen, die kleiner sind als der genannte vorgegebene Durchmesser der im wesentlichen sphärischen Verriegelungseinrichtung (26), und einander direkt gegenüberliegend längs den genannten Seitenwanderstreckungen (50, 52) fluchtend angeordnet sind.

9. Bindevorrichtung nach jedem vorhergehenden Anspruch, in welcher der flexible Arm (18) elastisch verformbar ist, um eine Zusammenwirkung der Verriegelungseinrichtung (20) mit der komplementären Verriegelungseinrichtung (40) zu gestatten, und normalerweise beaufschlagt ist, um danach die Zusammenwirkung der Verriegelungseinrichtung (26) mit der komplementären Verriegelungseinrichtung (40) aufrechtzuerhalten.

10. Bindevorrichtung nach jedem vorhergehenden Anspruch, in welcher die Richtung aus einem Richtungsbereich (75) zwischen der Richtung senkrecht nach unten und etwas unterhalb der Waagerechten ausgewählt ist, die sämtlich ein Hindurchziehen der Verriegelungseinrichtung (26) durch die komplementäre Verriegelungseinrichtung (40) hindurch gestatten.

**Revendications**

1. Dispositif d'attache (10), comprenant des moyens (12) de prise de fil pouvant être libérés d'un fil (14) ou analogue et réalisés d'une seule pièce avec des moyens (16) de maintien de sarments destinés à suspendre un ou plusieurs sarments (19) ou analogues; lesdits moyens (16) de maintien de sarments comprenant une branche allongée et flexible (18) s'étendant à partir desdits moyens (12) de prise d'un fil et déformable élastiquement pour définir une boucle; un élément (26) de verrouillage formé à une extrémité éloignée (24) de ladite branche flexible (18); un élément complémentaire (40) de verrouillage situé sur lesdits moyens (12) de prise d'un fil afin de s'enclencher avec ledit élément (26) de verrouillage pour fermer ladite boucle et permettre la suspension dudit ou desdits sarments (19) ou analogues audit fil (14) ou analogue; caractérisé en ce que ledit élément complémentaire (40) de verrouillage est sensible à l'application d'une force d'amplitude prédéterminée à ladite branche flexible (18), dans une direction permettant audit élément (26) de verrouillage d'être tiré à travers ledit élément complémentaire (40) de verrouillage, afin de libérer ledit élément (26) de verrouillage et d'ouvrir ladite boucle fermée.

2. Dispositif d'attache selon la revendication 1, dans lequel ledit élément de verrouillage se présente sous la forme d'une tête élargie (26) définissant une première surface de came et ledit élément complémentaire (40) de verrouillage est associé à une seconde surface de came (50, 52) afin de s'opposer normalement à la libération de ladite tête (26) à travers ledit élément complémentaire (40) de verrouillage.

3. Dispositif d'attache selon la revendication 1 ou la revendication 2, dans lequel lesdits moyens (12) de prise d'un fil comprennent une paroi périphérique (20) définissant un passage (28) de réception d'un fil présentant une entrée (29) et un élément flexible (32) de fermeture pouvant être déformé élastiquement dans une direction donnée afin de permettre l'entrée et la sortie dudit fil (14) par rapport à ladite entrée (29) et pouvant revenir élastiquement afin d'empêcher ledit fil (14) de sortir de ladite entrée (29).

4. Dispositif d'attache selon la revendication 3, dans lequel ladite paroi périphérique (20) définissant ledit passage (28) de réception de fil comprend en outre une partie déformable élastiquement (76), qui réagit également à ladite force appliquée à ladite branche flexible (18), en rappelant ledit élément flexible (32) de fermeture dans une direction pour fermer complètement ladite entrée (29) vers ledit passage.

5. Dispositif d'attache selon la revendication 4, dans lequel ladite paroi périphérique (20) définissant ledit passage (28) de réception de fil présente une configuration de forme globalement en U; une face ouverte de ladite paroi périphérique de forme en U forme ladite entrée (29) vers ledit passage; ledit moyen flexible de fermeture comprend un élément flexible (32) incliné vers l'intérieur dudit passage et s'étendant normalement en travers d'une proportion majeure de ladite entrée; et au moins une partie (76) de ladite paroi périphérique peut effectuer un mouvement de charnière en réponse à ladite force appliquée à ladite branche flexible (18) qui en part, afin de tendre à rapprocher l'un de l'autre ledit élément flexible (32) de fermeture et une partie opposée de ladite paroi périphérique (20) pour fermer complètement ladite entrée (29).

6. Dispositif d'attache selon l'une quelconque des revendications précédentes, dans lequel ledit élément complémentaire (40) de verrouillage présente un évidement (54, 56) de verrouillage définissant une surface intérieure destinée à s'enclencher de façon complémentaire avec ledit élément (26) de verrouillage et une surface d'entrée de came (58, 60) destinée à guider de façon coulissante ledit élément (26) de verrouillage pour l'enclencher avec ledit évidement de verrouillage 54, 56).

7. Dispositif d'attache selon la revendication 6, dans lequel ledit élément (26) de verrouillage est de configuration sensiblement sphérique et définit un diamètre d'une dimension prédéterminée; ledit élément complémentaire (40) de verrouillage comprend une gouttière (42) de forme globalement en U comportant des parties de parois latérales (46, 48) et définissant une dimension (44), en section transversale, inférieure à ladite dimension prédéterminée; lesdites parties de parois latérales comportent des prolongements (50, 52) de parois latérales; et lesdits évidements de verrouillage (54, 56) et lesdites surfaces d'entrée de came (58, 60) sont situées sur lesdits prolongements (50, 52) de parois latérales; ladite gouttière de forme en U et lesdits prolongements de ses parois latérales étant déformables élastiquement pour permettre audit élément de verrouillage (26) d'être tiré à travers eux en réponse à ladite force appliquée à ladite branche flexible (18).

8. Dispositif d'attache selon la revendication 7, dans lequel lesdits évidements de verrouillage (54, 56) sont globalement semi-circulaires et définissent des diamètres inférieurs audit diamètre prédéterminé dudit élément sensiblement sphérique (26) de verrouillage et sont alignés en opposition directe l'un à l'autre le long desdits prolongements (50, 52) des parois latérales.

9. Dispositif d'attache selon l'une quelconque des revendications précédentes, dans lequel ladite branche flexible (18) est déformable élastiquement pour permettre l'enclenchement dudit élément (26) de verrouillage avec ledit élément complémentaire (40) de verrouillage et est normalement rappelée pour maintenir ensuite l'enclenchement dudit élément (26) de verrouillage avec ledit élément complémentaire (40) de verrouillage.

10. Dispositif d'attache selon l'une quelconque des revendications précédentes, dans lequel ladite direction est choisie parmi une gamme de directions (75), entre la direction descendant verticalement et une direction quelque peu au-dessous de l'horizontale, qui permettent toutes audit élément (26) de verrouillage d'être tiré à travers ledit élément complémentaire (40) de verrouillage.

Fig.2.

Fig.1.

Fig.4.

Fig.3.

Fig.6.

Fig.7.

Fig.8.

Fig.5.